# EUROPEAN PATENT APPLICATION

(11) **EP 2 607 076 A1**
(43) Date of publication of application: **26.06.2013**
(21) Application number: 11817677.5
(22) Date of filing: 22.03.2011
(51) Int. Cl.: B32B 27/00, B32B 27/10, B32B 37/12, B32B 38/14, B41M 1/00

(54) **PERSPECTIVE FILM AND PREPARING METHOD THEREOF**

(30) Priority: 03.12.2010 CN 201010572642; 16.08.2010 CN 201020292721 U
(71) Applicant: Wen, Minghua, Guangzhou, Guangdong 511495 (CN)
(72) Inventor: Wen, Minghua, Guangzhou, Guangdong 511495 (CN)
(74) Representative: Vittorangeli, Lucia
(86) International application number: PCT/CN2011/072052
(87) International publication number: WO 2012/022149

(57) **Abstract**

A perspective film and a preparing method thereof are provided. The film comprises a transparent film (1) on which a color rendering layer (2) is printed and a base paper (3). Light-transmitting zones (21) are distributed on the color rendering layer (2). The transparent film (1) is attached to the base paper (3). The preparing method comprises the following steps: a) printing the color rendering layer (2) on the transparent film (1) by a printing machine; b) adhering the printed transparent film (1) to the base paper (3); c) cutting the transparent film (1) adhered on the base paper (3) to obtain the final product. By using the color rendering layer (2), the pattern on the transparent film (1) is clearly displayed. The light-transmitting zones (21) distributed on the color rendering layer (2) can meet the requirements regarding light-transmitting and perspective. As the transparent film (1) is not perforated, the film in the light-transmitting zone (21) can absorb ink, and the printed pattern will not be affected by the light intensity on both sides of the perspective film.

## Description

### Relevant technological fields

This invention relates to a kind of bi-viewable perspective film that can be used for advertising, decorating, and other such purposes, and is especially suited for use on glass surfaces and other such transparent substrates.The subject "bi-viewable perspective film" as used herein pertains to a kind of light permeable film that allows an image printed on one surface to be viewed on either sides of the film.

### Technological background

There currently exists a printing media known as the one-way vision vinyl which is created using a layer of printable film (usually PVC). Pressure-sensitive adhesives are applied to the back of the printing surface of the PVC film, after which the liner (aka. release paper) is pressed and secured onto the layer of adhesives, forming a three-layered structure. Finally, the vinyl is perforated with circular perforations spreading evenly over the PVC-adhesive-liner complex, each hole penetrating both the PVC printing film layer and the adhesive layer.

This type of vinyl is created using perforation machines that perforate the PVC-adhesive-liner complex with evenly spaced circular holes. The now-porous liner is then removed and replaced with a new un-perforated liner, forming a new three layered structure where only the PVC and adhesive layers are perforated. When using, one can simply remove the liner and apply the porous PVC layer directly onto the intended surface. This type of vinyl is widely used in advertising, especially on glass or similarly transparent surfaces. If the vinyl is placed on the windows of a car, only the image printed upon the vinyl will be viewable from the outside whereas an unobstructed view of the outer environment can be obtained from within the vehicle (an effective optical illusion created by the perforations on the PVC layer of the vinyl).

There are various disadvantages to the one-way vision identified as follows:
1) The perforation speed for manufacturing the vinyl is very slow (roughly 1m/min), severely limiting production efficiency;
2) The production method is not environmentally friendly due to the large amount of waste produced during the inefficient perforation process. Since the "holes" created during production is equal to around 50% of the surface area of the vinyl, up to 50% of the raw material used in production are discarded during the perforation process;
3) The production method is further wasteful as the liner must be replaced after perforation. The PVC film layer cannot be perforated alone as applying the pressure-sensitive adhesives to a porous PVC film layer would cause the adhesives to fill all the perforations. This means that the PVC film layer must be adhered onto the liner, perforated, and then the liner must be replaced. This further increases the amount of waste produced while unnecessarily increasing production costs;
4) The production method produces severe noise pollution due to the loud and continuous use of perforation machinery;
5) Since there are actual physical holes in the vinyl, the printed image clarity is severely limited when viewed from the front (for example, small lines would be cut into segments where it traverses the perforations, rendering smaller text unreadable);
6) The printed image can only be viewed from the printed side;
7) If there is a difference in the light's intensity present on either side of the image, especially when there is low light on the printed side of the fabric and more light coming from the back side of the fabric (for example, a printed image on a store window at night), the printed image will not be visible;
8) Since the PVC printing film is perforated, there are issues with low viscosity and with edge warping after placement onto a surface, resulting in insecure adhesions;
9) When replacing one-way vision vinyl, it is difficult to remove the vinyl from surfaces as it is rather fragile due to the perforation and tend to rip apart leaving a mess that is difficult and time consuming to clean up;
10) Dust tend to clutter in the perforations after the fabric is adhered to a surface, giving the image a dirty feel and leaving "hole-stains" even after the fabric is completely removed.

### Invention contents

The aim of this invention is to address the above problems and difficulties by providing an alternate medium. This invention concerns a kind of translucent fabric produced by the directly printing of a colour rendering layer onto a transparent film. This allows for an image printed on the transparent film (already pre-printed with the colour rendering layer) to display with stunning precision while being visible to both viewable sides (front and back), while also resolving the various production efficiency issues aforementioned.

The "colour rendering layer" as used herein pertains to a layer that is placed onto the transparent film in order to provide contrast for any additional prints. The application of such a method allows for a image printed on the transparent film to look as if it's printed on a solid perforated vinyl, without there being any physical perforations on the film. The "colour rendering layer" will be referred to as the "CRL" hereinafter for the sake of simplicity.

This invention may also include the addition of a convenient, sturdy, and widely applicable transparent pressure-sensitive adhesive layer onto the transparent film-CRL complex. Further replacement of the pressure-sensitive adhesive layer with electrostatic adhesion technology will result in an even more reusable, convenient, and environmentally product as a part of this invention.

The aims of this invention are achieved technically thus:

In this invention, the aforementioned bi-viewable perspective film is characterized by the inclusion of a transparent film, the CLR, and the liner. The CRL is set upon the aforementioned transparent film, which is adhered to the liner in with various adhesive techniques.

The CRL is a layer that is set upon the transparent film using one of multiple different mediums including but not limited to white ink, fluorescence ink, or any other colours and similar ink-like mediums that is able to achieve sufficient contrast, either by printing, pressing, stamping, or other similar adhesive processes.

In addition to providing contrast as aforementioned, the CRL also contains various repeating apertures called the light-transmitting zones. These zones are not physical constructs, and simply refer to the places where there is an absence of CRL presence. Within each of the light-transmitting zones, one can clearly see through the transparent film onto the other side.

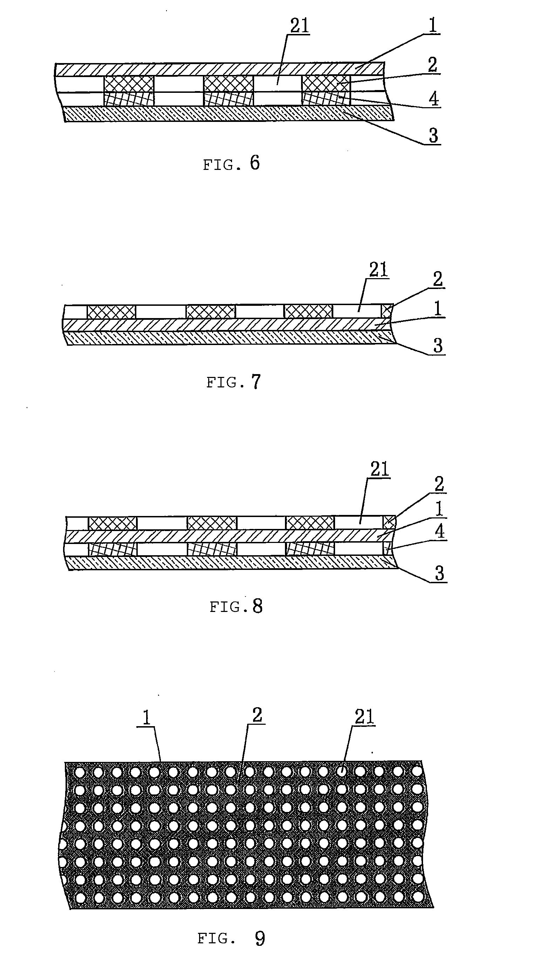

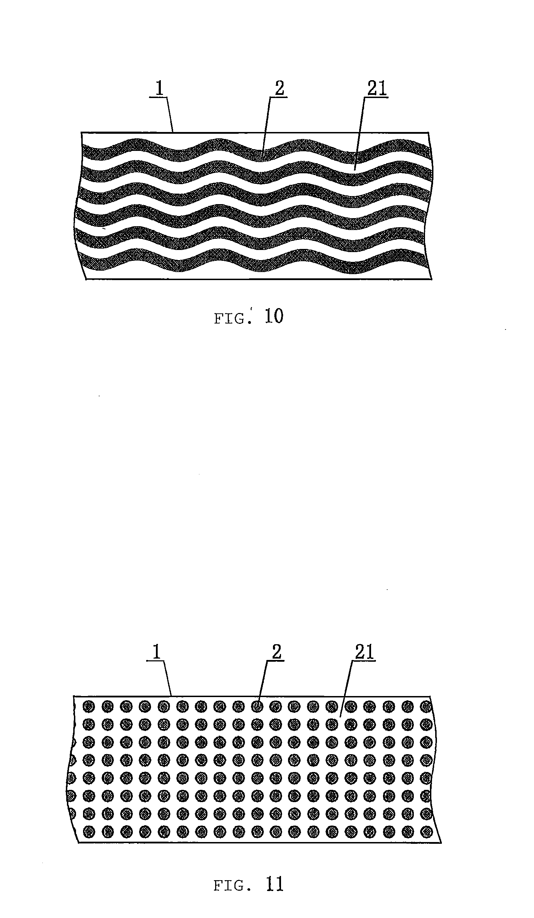

In order to achieve a wide variety of compositions and structure to cater to different user preferences, the aforementioned light-transmitting zones may be expressed in as apertures upon a CRL layer (for example, evenly spaced circular holes upon a white CRL layer), or the CRL layer may be smaller repeating patterns and shapes, where the space between each shape forms the body of the light-transmitting zones (for example, evenly printed solid white circles on the transparent film, where the spaces between the circles makes up the light-transmitting zones). Consult Fig. 9 and Fig 11 for clarification.

In order to achieve the aims of this invention, the aforementioned bi-viewable perspective film also partake various different structures in order to cater to different user preferences via the use of numerous adhesive techniques, namely by use of either a pressure-sensitive transparent adhesive layer or the aforementioned electrostatic adhesion technique, when the main body of the transparent film is adhered onto the liner.

In order for the transparent film to clearly portray the printed image and in order to prevent the background (on or behind the surface to which the perspective film is adhered) from interfering with the printed image, an additional light filtering layer can also be added.

The "light filtering layer" as used herein pertains to a layer that is virtually the same as the CRL with the exception that its function is to solidify the colours of the images printed on the bi-view perspective film. In other words, where as the CRL usually uses translucent or lighter colours for the sake of contrast, the "light filtering layer" (hereinafter referred to as the "LFL") usually uses solid or darker colours for the sake of solidity. In terms of shape however the LFL and the CRL are exact duplicates (ie. position and presence of light transmitting zones, shape of light transmitting zones). Note that the inclusion of a LFL is optional.

The primary and secondary steps for manufacturing the bi-viewable perspective film detailed in this section are as follows:
1) Using a printing machine, a 1µm m-20µm thick colour rendering layer populated with light-transmitting zones is printed onto the transparent film;
2) The transparent film that is printed with the colour rendering layer is adhered to the liner;
3) The transparent film with the relevant parts detailed above, once readily adhered to the liner, is rewind and packaged, resulting in the completion of the perspective film material production process.

In order to ensure that the colour rendering layer is firmly pressed and does not lose any colour, the aforementioned transparent film is corona treated up to 36-56 dynes with a high voltage current prior to the start of step (1). Protective fluid can also be applied to the surface of the CRL to achieve this end.

In order to ensure that the CRL does not peel off from the layered complex, a protective liquid is applied to the surface of the printed colour rendering layer upon the completion of step (1), and only after that can step (2) proceed.

Since the CRL can be pressed onto either side of the transparent film (for example, the CRL could be sandwiched between the liner and the transparent film, or the transparent film could be sandwiched between the liner and the CRL), the next optional step is variable depending on the applicable printing surface.

The "printing surface" as used herein pertains to the surface in the finished bi-viewable perspective film product that can be printed on, and as such the printing surface is naturally opposite to the side adhered to the liner, since the liner cannot be printed upon. The printing surface is also hereby designated as the "front" of the film, whereas the "back" of the film is the side adhered to the liner, upon which nothing can be printed.

In order to enhance the effect of future printings on the printing surface of the bi-viewable perspective film, a facilitative ink absorption and colour enhancement agent is applied to the printing surface. If the transparent film is the printing surface of the bi-viewable perspective film, then the facilitative ink absorption and colour enhancement agent should be applied to the surface of the transparent film prior to step (1). If the surface of the CRL is to be the printing surface of the bi-viewable perspective film, then the facilitative ink absorption and colour enhancement agent should be applied to the surface of the CRL upon the completion of step (1) before step (2) commences.

In order for the transparent film to clearly portray the printed image and in order to prevent the background (on or behind the surface to which the perspective film is adhered) from interfering with the printed image, an additional step involving the adhesion of the LFL in a similar manner to the CRL can be added after the completion of step (1) before step (2) commences.

The body of the CRL-transparent film complex (with or without the LFL) can be adhered to the liner with a variety of different medium and/or techniques depending on the type of transparent film used. If the transparent film is suited for adhesives, a transparent pressure-sensitive adhesives layer can be applied to the liner. Since the layer of adhesives is transparent, it will not impede light transmission. After the liner with the pressure-sensitive adhesives layer applied is pressed onto the transparent film complex, the adhesives will adhere to the transparent film more strongly than it does the liner. Thus when one peels off the liner, the pressure-sensitive adhesives is retained by the body of the bi-viewable perspective film. If the transparent film is made using electrostatic technology, there would be no need for an adhesives layer and the liner would simply be pressed onto the transparent film to form the bi-viewable perspective film.

### Bi-viewable perspective film characteristics

The Bi-viewable perspective films' manufacture process manifests in a variety of different ways that define and distinguish the bi-viewable perspective film from other outdoor printing medium.
- Images printed on the printing surface of the bi-viewable perspective film can be clearly viewed from the front. If one was to simply print an image onto a transparent film, the image would not be clear. The surroundings will interfere, as will light coming from the back, resulting in a loss of vibrancy and precision of the printed images. As such the method of simply printing a image onto a transparent film is not often used within the advertisement industry. Since the bi-viewable perspective film contains both a transparent film layer and a colour rendering layer, images are not printed against a transparent backdrop but against a relatively solid colored layer (usually white). This causes the print to be clear and vibrant.
- Since the CRL contains apertures in which there is an absence of CRL, visually speaking it is comparable to the effect of one-way vision vinyl. Fig. 9 shows the front view of the bi-viewable perspective film, that is, looking directly at the printing surface. As one can see, both the CRL (2) and the light transmitting zones (21) are on the transparent film, where light transmitting zones (21) are apertures where the CRL (2) does not cover. However since there are no actual perforations on the transparent film (1) at the locations of the light transmitting zones (21), an image printed upon the bi-viewable perspective film can also be viewed from the back of the film through the portion of the image that is printed in the light transmitting zones (21). Since the light transmitting zones are not physical perforations upon the transparent film an image printed upon the bi-viewable transparent film will have significantly higher resolution when viewed from the front as compared to traditional printing medium such as the one way vision vinyl since where the one way vision vinyl has non-printable perforations the bi-viewable transparent film have printable light transmitting zones that can indeed absorb and retain ink and other such printing mediums.
- The light transmitting zones furthermore ensure sufficient light permeability when viewed from the back.
- The bi-viewable perspective film allows for a very clear image even in low light conditions. Optically an image is merely a product of reflected colored light. Traditional printing medium suffers when placed in low light situations because of this, as there is less light to be reflected. Case in point; at night, images printed upon a one way vision vinyl on the windows of a closing store is all but invisible since the light coming from inside of the store is flooding through the perforations on the vinyl and overpowering the light reflecting off the printed surface of the vinyl. Since the bi-viewable perspective film is based on a transparent medium, there is a degree of light permeability both from front to back and from back to front, allowing a larger degree of visibility in low light situations. Furthermore, since the light transmitting zones are also printed with a portion of the image, light coming through the light transmitting zones from the back will also serve to increase the visibility of the overall image in low light situations.
- Since there are no physical perforations, there is a large and consistent area of contact between the bi-viewable perspective film and the surface it is adhered to, and therefore there is no issue with edge warping or fragility during application. Since it is one single piece of non-perforated material, it will not tear to pieces, and is thus very easy to apply and change.
- There will be no dust clutters in the light transmitting zones as there are no physical perforations on the transparent film.
- Since the CRL is applied onto the transparent film through direct printing and/or similar techniques (ie. stamping), production is highly efficient (50-200 m/min). This is an average of 125 times the speed of traditional perforation techniques.
- Since there is no perforation and thereby no wasted liner, production costs is lower than that of traditional perforation techniques.
- There is less noise pollution from printing and/or similar techniques as compared to perforation.
- Depending on the configuration of the bi-viewable perspective film, electrostatic technology can be incorporated to reduce wastes and further increase this products' environmental friendliness while adding increase versatility to this invention. There will also be no risk of glue residue on the surface to which the bi-viewable perspective film is applied.
- In the case that electrostatic adhesion technology is utilized, the CRL also doubles as a extra porous layer. Since the thickness of the CRL is set at 1-20µm, the light-transmitting zones form tiny vacuums when an electrostatic bi-viewable perspective film is applied to a surface. This allows for an increase in adhesion potency over contemporary electrostatic techniques.
- If a LFL is present in the bi-viewable perspective film, additional solidity is provided to the CFL. This prevents the printed images from being affected by the background behind the surface to which the bi-viewable perspective film is adhered.

Further discussion of this invention requires extensive use of the schematic diagrams accompanying this invention. Note that the same components retain the same numbering across the multiple schematics as detailed below. Drawings not to scale;

Schematic components are (1) Transparent film, (2) Colour rendering layer, (21) Light filtering zones, (3) Liner, (4) Light filtering layer, (5) Transparent pressure-sensitive adhesives layer.

Figures one through eight gives examples of different scenarios of the configuration of the bi-viewable perspective film but is not intended to limit the scope of this invention.

### Diagram descriptions

Figure 1 is the structural cross-section diagram for Invention Scheme 1;
Figure 2 is the structural cross-section diagram for Invention Scheme 2;
Figure 3 is the structural cross-section diagram for Invention Scheme 3;
Figure 4 is the structural cross-section diagram for Invention Scheme 4;
Figure 5 is the structural cross-section diagram for Invention Scheme 5;
Figure 6 is the structural cross-section diagram for Invention Scheme 6;
Figure 7 is the structural cross-section diagram for Invention Scheme 7;
Figure 8 is the structural cross-section diagram for Invention Scheme 8;
Figure 9 is the schematic plan of the bi-viewable perspective film with circular light-transmitting zones.
Figure 10 is the schematic plan of the bi-viewable perspective film with strip-shaped CRL.
Figure 11 is the schematic plan of the bi-viewable perspective film with circular islet style CRL.

### Specific implementation method

Figures one through eleven illustrate the constituents of the bi-viewable perspective film. In particular, a transparent film (1) is printed with the CRL (2) that is riddled with light-transmitting zones (21) and attached to the liner (3). This allows prints to obtain a higher resolution while still retaining a degree of light permeability. Since the locations with light-transmitting zones (21) are still covered by the transparent film (1), there is still ink absorption and thus the printing is able to achieve a high level of precision in spite of its light permeability. This also allows the image to be viewed at around 50% resolution from the back of the film through the ink retained by the transparent film (1) at the locations of the light-transmitting zones (21). In order to achieve a wide variety of compositions and structure to cater to different user preferences, the aforementioned light-transmitting zones (21) may be expressed in as apertures upon a CRL (2) layer (for example, evenly spaced circular holes upon a white CRL (2)) or the CRL (2) layer may be smaller repeating patterns and shapes, where the space between each shape forms the body of the light-transmitting zones (21) (for example, evenly printed solid white circles on the transparent film (1), where the spaces between the circles makes up the light-transmitting zones (21)). Consult Fig. 9, Fig 10, and Fig 11 for three of the numerous possible scenarios.

The colour rendering layer (2) is adhered to the transparent film (1) using printing methods. This allows for a high production speed of 50-200 meters/minute. This method is also very cost effective, results in less defective products per batch, and does not generate as much waste as does traditional perforation techniques through conservation of liner (3) material. The light-transmitting zones (21) can furthermore be spread out on the CRL (2) according to user specifications in any shape that is desired. The thickness range of the colour rendering layer (2) is 1∼20µm, allowing for both effective visual enhancement while also ensuring that the transparent film (1), if electrostatic, would readily adhere to targeted surfaces.

After the transparent film (1) with its relevant components printed is adhered to the liner (3), the bi-viewable perspective film can be printed with the desired images. When the liner (3) is ripped off, the bi-viewable perspective film can be easily applied to the desired surface via either electrostatic techniques or a transparent pressure-sensitive adhesives layer (5). In order for the transparent film (1) to display various visual effects, the printed colour rendering layer (2) can be printed with a wide variety of medium including but not limited to white ink, fluorescent ink, or with any other colours (though in practice, white is most commonly used). The transparent film (1) itself can also be made from a wide variety of mediums, including but limited to PVC, PE, or PET membranes, and a facilitative ink absorption and colour enhancement agent could also applied to its surface to facilitate ink vibrancy and retention. Moreover since the transparent film (1) is not actually perforated, the fabric is very resilient, the printed images will have high accuracy, the film will be easier to apply and remove, and there will be no pollution due to dust clutters accumulating within the perforations.

The transparent film (1) can be adhered to the liner (3) in a variety of ways.

If it is adhered via a transparent pressure-sensitive adhesive layer (5), then removable adhesives should be used to prevent residual glue. However to further lower production costs as per request from customers, normal glue is sometimes used as well. When applying, simply tear off the liner (3) and then press the transparent film on the glass, vehicle windows or other transparent panels via the transparent adhesive layer (5). Not only will it adhere firmly, it is convenient for use, replacement, and is applicable both indoors and outdoors. Since the adhesive layer is transparent, it will not have any impact on light transmission and consequently the perspective effects of the transparent film (1).

If the transparent film (1) used is a type of static film, it will be adhered to the liner (3) via static electricity. When using, tear off the liner (3) and press it onto glass, vehicle windows, or other types of transparent panels and it will adhere through static electricity. This method is environmentally friendly, while also being easier to apply and remove and more cost effective, while also rendering the film reusable without leaving any glue residue. Both sides of a static film can be used as the adhesive surface, allowing for a wide range of applications (especially in-doors).

For further structural variations, the colour rendering layer (2) can be printed on either the front or back of the transparent film, with back being defined as the layer closest to the liner (3) and front defined as the opposite direction. When the transparent film (1) used is a static, the colour rendering layer (2) being printed on the surface of the transparent film (1) refers to it being printed on the opposite side of where the liner (3) attaches with the transparent film (1), whereas if the colour rendering layer (2) is being printed on the back of the transparent film (1), it is being printed in-between the liner (3) and the transparent film (1).

In order for the transparent film (1) to more clearly display printed images, and also to prevent the background behind the film from influencing the printed images and thus decreasing image definition, a light filtering layer (4) is printed also printed on the transparent film in a way as to correspond exactly with the colour rendering layer (2). This means that the light-transmitting zones are also distributed throughout the light filtering layer (4), and that the light transmitting zones of the light filtering layer (4) corresponds exactly with the light transmitting zones (21) of the colour rendering layer (2) in every-which way, be it shape, location, quantity... etc. In order to achieve structural variation, the light filtering layer (4) is printed on the colour rendering layer (2) or on the opposite side of the transparent film (1) from the colour rendering layer (2), though it is primarily printed on the side of the transparent film (1) that will not be printed on. To achieve optimal effect, the light filtering layer (4) is printed upon the transparent film (1) with black or another solid type of colour, with black being the most commonly used.

In this invention, the detailed preparation method and process of the aforementioned perspective film are as follows:
1. In order to ensure the printed CRL (2) is firm and will not lose color, the transparent film (1) should be treated with up to 36-56 dynes first. If the transparent film (1) used is PVC, then such treatment is not necessary. Print a 1µm - 20µm thick colour rendering layer (2) containing the light-transmitting zones (21) on a transparent film (1) with a printing machine. To prevent the CRL (2) from peeling off, apply a protective liquid layer to the surface of the CRL (2) after its application. If the surface of the CLR (2) is to be used as the future printing surface, apply a facilitative ink absorption and colour enhancement agent to its surface. If the surface of the transparent film (1) is to be used as the future printing surface, apply said agent to the transparent film (1) on the appropriate side instead.
2. Adhere the transparent film (1) (on which the printed colour rendering layer (2) is pressed) to the liner (3); if the transparent film (1) is not the transparent static cling film, apply the transparent adhesive layer (5) to the liner (3) with the coating machine or apply the transparent pressure-sensitive adhesive layer (5) to the transparent film (1) with the coating machine. Dry the adhesive layer (5) with the drying compartment of the coating machine and adhere the completed transparent film (1) to the liner (3) with the transparent pressure-sensitive adhesive layer (5) with the help of the laminating compartment of the coating machine. If the transparent film (1) is static, attach the transparent film (1) to the liner (3) with the help of static electricity or press the light filtering layer (4) to the transparent film (1) with printed colour rendering layer (2) before attaching the transparent film (1) to the liner (3).
3. The bi-viewable perspective film manufacture process is completed after the liner-film complex is sectioned into different sizes as required and packaged.

Because the printed colour rendering layer (2) and the light filtering layer (4) can be pressed on either side of the transparent film (1), and because there are various adhesive techniques that can be used, there is need to briefly mention the various structural varieties possible. Note that this is simply meant as detailed examples, and should in no way limit the scope of this invention.

Figures one through four detail possible scenarios where a transparent pressure-sensitive adhesives layer is used either with or without a LFL.

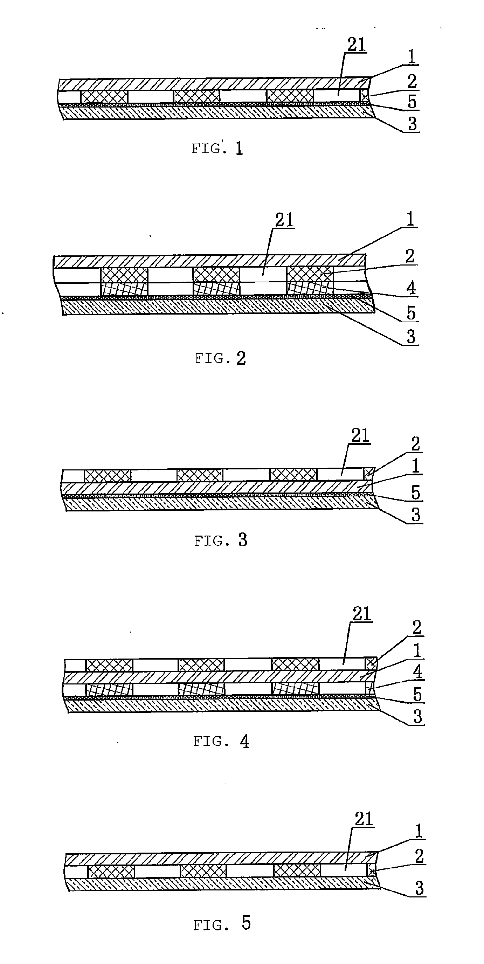

**Figure 1** shows a possible scenario. The transparent film (1) is adhered to the liner (3) with the transparent pressure-sensitive adhesive layer (5). The liner (3) can be PE coated release paper or PET release film. The CRL (2) is pressed on the surface of the transparent film (1) where the transparent film (1) is pressed against the liner (3), between the transparent film (1) and the transparent pressure-sensitive adhesives layer (5). For this specific example, the preparation method is thus; if the transparent film (1) is PVC film, no high-voltage corona treatment is necessary and the CRL (2) can be printed on directly. If the transparent film (1) is PE or PET film, or another kind of transparent plastic film, high-voltage corona treatment will need to be carried out first at a voltage between 36 and 56 dynes (38 dynes preferred), after which the CRL (2) can be applied on the treated surface of the transparent film (1). When printing the CRL (2), ensure that it is between 1µm -20µm in thickness. Also ensure that the light-transmitting zones (21) are spread over the CRL (2) evenly using appropriate printing techniques (usually intaglio printing techniques). Apply now a protective liquid layer (not indicated in the figure) to the printed CRL (2) to prevent it from peeling off easily. Then apply the transparent pressure-sensitive adhesive layer (5) to the surface of the transparent film (1) on which the CRL (2) resides, or apply the transparent pressure-sensitive adhesives onto the liner (3) itself. Lastly, press the surface of the transparent film (1) that is printed with CRL (2) onto the liner (3). The side of the transparent film (1) that is not printed with CRL (2) (aka. the front of the film) is used as the printing surface. Although the transparent pressure-sensitive adhesives layer shown in the figure is flat, in actuality the adhesives fill the entire light-transmitting zone (21) of the CRL (2) after being compounded forcefully by the laminating machine. Note that the drawings are not to scale, and that in reality the CRL (2) is a significantly thinner layer than the transparent film (1).

**Figure 2** s a scenario based off that which is shown in Figure 1. In addition to the processes mentioned in Figure 1, an additional light filtering layer (4) is printed below the colour rendering layer (2) that is printed beneath the transparent film (1). This means that in accordance with the aforementioned preparation processes, an extra step of applying (usually via printing) the LFL (4) onto the CRL (2) is added after the CRL (2) is printed onto the transparent film (1). The LFL (4) is usually printed in a dark solid colour, such as black. Note that the light filtering zones (21) of both the CFL (2) and LFL (4) correspond exactly, and the LFL (4) is in no way obstructing the light filtering zones (21) of the CFL. When printing the CRL (2) and the LFL (4), apply a protective liquid layer (not indicated in figure) to the surface between the light filtering layer (4) and the CRL (2) to prevent either layer from peeling off easily. Then, apply a transparent pressure-sensitive adhesives layer (5) to the surface of the transparent film (1) that is printed with the CFL (2) and LFL (4) or apply said adhesives to the liner (3). Finally, adhere the transparent film (1) and the liner (3) with the CRL (2) and LFL (4) situated between the two. Although the transparent pressure-sensitive adhesives layer shown in the figure is flat, in actuality the adhesives fill the entire light-transmitting zone (21) of the CRL (2) and LFL (4) after being compounded forcefully by the laminating machine. Note that the drawings are not to scale, and that in reality the CRL (2) is a significantly thinner layer than the transparent film (1).

**Figure 3** shows a possible scenario. The transparent film (1) is adhered to the liner (3) with the transparent pressure-sensitive adhesive layer (5). The liner (3) can be PE coated release paper or PET release film. The CRL (2) is pressed on the surface of the transparent film (1) opposite to where the transparent film (1) is pressed against the liner (3). For this specific example, the preparation method is thus; if the transparent film (1) is PVC film, no high-voltage corona treatment is necessary and the CRL (2) can be printed on directly. If the transparent film (1) is PE or PET film, or another kind of transparent plastic film, high-voltage corona treatment will need to be carried out first at a voltage between 36 and 56 dynes (38 dynes preferred), after which the CRL (2) can be applied on the treated surface of the transparent film (1). When printing the CRL (2), ensure that it is between 1µm -20µm in thickness. Also ensure that the light-transmitting zones (21) are spread over the CRL (2) evenly using appropriate printing techniques (usually intaglio printing techniques). Apply now a protective liquid layer (not indicated in the figure) to the printed CRL (2) to prevent it from peeling off easily. Then apply the transparent pressure-sensitive adhesive layer (5) to the surface of the transparent film (1) where there is no CRL (2) present, or apply the transparent pressure-sensitive adhesives onto the liner (3) itself. Lastly, press the surface of the transparent film (1) that is not printed with CRL (2) onto the liner (3). The side of the transparent film (1) that is printed with CRL (2) (aka. the front of the film) is used as the printing surface. Note that the drawings are not to scale, and that in reality the CRL (2) is a significantly thinner layer than the transparent film (1).

**Figure 4** is a scenario based off that which is shown in Figure 3. In addition to the processes mentioned in Figure 1, an additional light filtering layer (4) is printed below transparent film (1) and between the transparent film (1) and the transparent pressure-sensitive adhesives layer (5). This means that in accordance with the aforementioned preparation processes, an extra step of applying (usually via printing) the LFL (4) onto the transparent film (1) is added either before or after the CRL (2) is printed onto the transparent film (1) so that the CRL (2) and LFL (4) are on different sides of the transparent film (1). The LFL (4) is usually printed in a dark solid colour, such as black. Note that the light filtering zones (21) of both the CFL (2) and LFL (4) correspond exactly, and the LFL (4) is in no way obstructing the light filtering zones (21) of the CFL. Now apply a transparent pressure-sensitive adhesives layer (5) to the surface of the transparent film (1) that is printed with the LFL (4) or apply said adhesives to the liner (3). Finally, adhere the transparent film (1) and the liner (3) with the LFL (4) situated between the two. Although the transparent pressure-sensitive adhesives layer shown in the figure is flat, in actuality the adhesives fill the entire light-transmitting zone (21) of the LFL (2) and LFL (4) after being compounded forcefully by the laminating machine. Note that the drawings are not to scale, and that in reality the CRL (2) and LFL (4) are significantly thinner layers than the transparent film (1).

Figures five through eight detail possible scenarios where electrostatic technology is used. Namely, the transparent film (1) is electrostatic.

**Figure 5** shows a possible scenario. The transparent film (1) is adhered to the liner (3) with static electricity. The liner (3) can be PE coated release paper or PET release film. The CRL (2) is pressed on the surface of the transparent film (1) where the transparent film (1) is pressed against the liner (3), between the transparent film (1) and the liner (3). The light transmitting zones (21) act as tiny vacuums to aid the electrostatic effect of the transparent film (1). For this specific example, the preparation method is thus; if the transparent film (1) is PVC film, no high-voltage corona treatment is necessary and the CRL (2) can be printed on directly. If the transparent film (1) is PE or PET film, or another kind of transparent plastic film, high-voltage corona treatment will need to be carried out first at a voltage between 36 and 56 dynes (38 dynes preferred), after which the CRL (2) can be applied on the treated surface of the transparent film (1).

When printing the CRL (2), ensure that it is between 1µm -20µm in thickness. Also ensure that the light-transmitting zones (21) are spread over the CRL (2) evenly using appropriate printing techniques (usually intaglio printing techniques). Lastly, press the surface of the transparent film (1) that is printed with CRL (2) onto the liner (3). The side of the transparent film (1) that is not printed with CRL (2) (aka. the front of the film) is used as the printing surface. When using, simply remove the liner (3) and apply the transparent film (1) printed with CFL (2) onto intended surfaces. The finished product is able to adhere to surfaces with the front or the back of the finished bi-viewable perspective film, and is thus very versatile. Note that the drawings are not to scale, and that in reality the CRL (2) is a significantly thinner layer than the transparent film (1).

**Figure 6** is a scenario based off that which is shown in Figure 5. In addition to the processes mentioned in Figure 5, an additional light filtering layer (4) is printed below the colour rendering layer (2) that is printed beneath the transparent film (1). This means that in accordance with the aforementioned preparation processes, an extra step of applying (usually via printing) the LFL (4) onto the CRL (2) is added after the CRL (2) is printed onto the transparent film (1). The LFL (4) is usually printed in a dark solid colour, such as black. Note that the light filtering zones (21) of both the CFL (2) and LFL (4) correspond exactly, and the LFL (4) is in no way obstructing the light filtering zones (21) of the CFL. Now adhere the transparent film (1) and the liner (3) with static electricity, with the CRL (2) and LFL (4) situated between the two. The front of the transparent film (1) will be used as the printing surface. The finished product is able to adhere to surfaces with the front or the back of the finished bi-viewable perspective film, and is thus very versatile. Note that the drawings are not to scale, and that in reality the CRL (2) is a significantly thinner layer than the transparent film (1).

**Figure 7** shows a possible scenario. The transparent film (1) is adhered to the liner (3) with static electricity. The liner (3) can be PE coated release paper or PET release film. The CRL (2) is pressed on the surface of the transparent film (1) opposite to where the transparent film (1) is pressed against the liner (3). For this specific example, the preparation method is thus; if the transparent film (1) is PVC film, no high-voltage corona treatment is necessary and the CRL (2) can be printed on directly. If the transparent film (1) is PE or PET film, or another kind of transparent plastic film, high-voltage corona treatment will need to be carried out first at a voltage between 36 and 56 dynes (38 dynes preferred), after which the CRL (2) can be applied on the treated surface of the transparent film (1). When printing the CRL (2), ensure that it is between 1µm -20µm in thickness. Also ensure that the light-transmitting zones (21) are spread over the CRL (2) evenly using appropriate printing techniques (usually intaglio printing techniques). Finally, press the surface of the transparent film (1) that is not printed with CRL (2) onto the liner (3). The light transmitting zones (21) act as tiny vacuums to aid the electrostatic effect of the transparent film (1) and helps it adhere to the liner (3) and any future surfaces. The side of the transparent film (1) that is printed with CRL (2) (aka. the front of the film) is used as the printing surface. It is therefore treated with a facilitative ink absorption and colour enhancement agent. The finished product is able to adhere to surfaces with the front or the back of the finished bi-viewable perspective film, and is thus very versatile. Note that the drawings are not to scale, and that in reality the CRL (2) is a significantly thinner layer than the transparent film (1).

**Figure 8** is a scenario based off that which is shown in Figure 7. In addition to the processes mentioned in Figure 5, an additional light filtering layer (4) is printed below the transparent film (1) between the transparent film (1) and the liner (3). This means that in accordance with the aforementioned preparation processes, an extra step of applying (usually via printing) the LFL (4) onto the electrostatic transparent film (1) is added. The LFL (4) is usually printed in a dark solid colour, such as black. Note that the light filtering zones (21) of both the CFL (2) and LFL (4) correspond exactly, and the LFL (4) is in no way obstructing the light filtering zones (21) of the CFL. Now adhere the transparent film (1) and the liner (3) with static electricity, with the LFL (4) situated between the two. The front of the CRL (2) will be used as the printing surface. It is therefore treated with a facilitative ink absorption and colour enhancement agent. The finished product is able to adhere to surfaces with the front or the back of the finished bi-viewable perspective film, and is thus very versatile. Note that the drawings are not to scale, and that in reality the CRL (2) is a significantly thinner layer than the transparent film (1).

**Figure 9** is the schematic for circular light-transmitting zones (21). **Figure 10** and **Figure 11** are the schematics for strip-shaped and circular islet shaped CRL (2). From these schematics, we can clearly see that there is a variety of different variations that can be made to the size and shape of both the CRL (2) and the corresponding LFL and the light-transmitting zones (21).

The bi-viewable perspective film invention can be used thus; first, an image is printed onto the printing surface. The printed film is then cut into the appropriate sizes. Peel off the liner (3) before applying the vinyl to a surface such as glass or other similar substrates. Finally, ensure that the film is adhered properly with the help of a squeegee. If the transparent film (1) used in the production of the bi-viewable perspective film is electrostatic, then after application the film can also be removed, relocated, and reused.

Summarily, the contents of this section are described through implementation examples that are not intended to limit the scope of this invention. With reference to the description of this invention, any changes to the public implementation examples that professionals within this industry can easily think of should be considered to be within the scope of this invention.

## Claims

1. Perspective film **characterized by** the fact that it comprises a transparent film (1) and liner (3), where the transparent film (1) is adhered to the liner (3) and is printed with a colour rendering layer (2), light-transmitting zones (21) being distributed on the colour rendering layer (2).

2. Perspective film according to claim 1, **characterized by** a printed colour rendering layer (2) that is printed upon the transparent film with white ink, fluorescent ink, or any other kind of ink.

3. Perspective film according to claim 1, **characterized by** the presence of various circular, quadrilateral, or any other shaped light-transmitting zones (21) distributed on the colour rendering layer.

4. Perspective film according to claim 1, **characterized by** a printed colour rendering layer (2) comprising various repeating shapes and designs, where the un-printed space between the repeating shapes and designs are referred to as the light-transmitting zones (21).

5. Perspective film according to claim 1, **characterized by** the presence of a liner (3) upon which the transparent film (1) is adhered via a transparent adhesive layer (5).

6. Perspective film according to claim 1, **characterized by** a transparent film (1) with electrostatic properties, and as such the electrostatic transparent film is also adhered to the liner (3) with static electricity.

7. Perspective film according to claim 1, 5, or 6 **characterized by** a printed colour rendering layer (2) that is adhered to either side (front or back) of the transparent film (1).

8. Perspective film according to claim 1, 5, or 6 **characterized by** the presence of a light filtering layer (4) that is adhered to the transparent film (1), the light filtering layer (4) corresponding to the aforementioned printed colour rendering layer (2).

9. Perspective film according to claim 8, **characterized by** the presence of a light filtering layer (4) that is pressed on top of or on either side of the printed colour rendering layer (2), or on the opposite side of the aforementioned transparent film (1) in a position corresponding to the colour rendering layer (2).

10. A method for manufacturing a perspective film according to any of the aforementioned Claims, **characterized by** the following steps:
1. Using a printing machine, a 1µm-20µm thick colour rendering layer (2) provided with light-transmitting zones (21) is pressed onto the transparent film (1);
2. The transparent film (1) that is already printed with the colour rendering layer (2) is adhered to the liner (3);
3. The transparent film (1) with the relevant parts detailed above, once readily adhered to the liner (3), is sectioned into different sizes as required, and packaged, resulting in the completion of the perspective film material production process.

11. A method according to Claim 10, wherein the aforementioned transparent film (1) is corona treated prior to step 1 with a high voltage current up to 36-56 dynes.

12. A method according to Claim 10, wherein a protective liquid is applied to the surface of the printed colour rendering layer (2) upon the completion of step 1, after which step 2 can occur.

13. A method according to Claim 10, wherein a facilitative ink absorption and colour enhancement agent is applied to the surface of the printed colour rendering layer (2) upon the completion of step 1, after which step 2 can occur.

14. A method according to Claim 10, wherein the light filtering layer (4) is adhered to the transparent film (1) upon the completion of step 1, after which step 2 can occur.

15. A method according to Claim 10, wherein the adhesion of the transparent film (1) onto the liner (3) refers to the process by which the transparent adhesive layer (5) is first spread upon the liner (3) with a adhesive dispensing machine, after which the transparent adhesive layer is congealed with the drying compartment of said adhesive dispensing machine, after which the liner (3) containing the dried adhesive layer (5) is pressed with the transparent film (1) that had been already printed with the colour rendering layer (2) using the laminating compartment of said adhesive dispensing machine.

16. A method according to Claim 10, wherein the completion of step 2 is **characterized by** the adhesion of the processed transparent film (1) ready printed with the colour rendering layer (2) and the liner (3) via electrostatic interactions.
